# EUROPÄISCHE PATENTANMELDUNG

(11) **EP 2 628 805 A1**
(43) Veröffentlichungstag der Anmeldung: **21.08.2013**
(21) Anmeldenummer: 12155302.8
(22) Anmeldetag: 14.02.2012
(51) Int. Cl.: C21B 13/00, C21B 13/02

(54) **Verfahren und Vorrichtung zur Reduktion von eisenoxidhältigen Einsatzstoffen in einem Hochdruckreduktionsaggregat**

(71) Anmelder: Siemens VAI Metals Technologies GmbH, 4031 Linz (AT)
(72) Erfinder: Millner, Robert, 3382 Loosdorf (AT); Rosenfellner, Gerald, 3352 Ertl (AT)
(74) Vertreter: Maier, Daniel Oliver

(57) **Zusammenfassung**

Die Erfindung betrifft ein Verfahren zur Reduktion von eisenoxidhältigen Einsatzstoffen, bei dem ein Reduktionsgas in ein Hochdruckreduktionsaggregat (1) eingeleitet wird. In dem Hochdruckreduktionsaggregat (1) wird das Reduktionsgas durch Reduktion von eisenoxidhältigen Einsatzstoffen verbraucht und als Topgas aus dem Hochdruckreduktionsaggregat (1) abgezogen. Zumindest eine Teilmenge des Topgases wird als Recyclegas einem Feedgas zugemischt, wobei das Reduktionsgas dadurch erzeugt wird, dass aus der durch das Zumischen des Recyclegases zu dem Feedgas erhaltene Gasmischung nach einer oder mehreren Kompressionschritten CO₂ abgetrennt wird, und das Recyclegas dem Feedgas in zumindest zwei voneinander getrennten Recyclegasteilströmen mit Recyclegasteilstromdrücken in verschiedenen Abständen vom Hochdruckreduktionsaggregat (1) zugemischt wird.

## Beschreibung

### Technisches Gebiet

Die Erfindung betrifft ein Verfahren zur Reduktion von eisenoxidhältigen Einssatzstoffen, sowie eine Vorrichtung zur Durchführung des Verfahrens.

Konkret werden bei dem erfindungsgemäßen Verfahren eisenoxidhältige Einsatzstoffe wie beispielsweise Eisenerz, eisenerzhältige Stoffe, teilweise reduzierte eisenoxidhältige Stoffe in einem Hochdruckreduktionsaggregat durch Einleitung eines Reduktionsgases in das Hochdruckreduktionsaggregat reduziert. Das bei der Reduktion verbrauchte Reduktionsgas wird dem Hochdruckreduktionsaggregat als Topgas abgezogen. Das Reduktionsgas wird dadurch erzeugt, dass einem Feedgas, welches beispielsweise als Exportgas aus einer Anlage zur Roheisenerzeugung exportiert wird, zumindest eine Teilmenge des abgezogenen Topgases als Recylegas zugemischt wird und aus der durch das Zumischen des Recyclegases zum Feedgas erhaltenen Gasmischung nach einem oder mehreren Kompressionsschritten CO₂ abgetrennt wird.

Weiters betrifft die Erfindung eine Vorrichtung zur Durchführung des oben beschriebenen Verfahrens. Die Vorrichtung umfasst ein Hochdruckreduktionsaggregat mit einer Reduktionsgasleitung und einer Topgasleitung, eine Feedgasleitung zur Zufuhr von Feedgas beziehungsweise zur Zufuhr einer Gasmischung aus Feedgas und Recyclegas in eine Einrichtung zur Abtrennung von CO₂ mit in der Feedgasleitung angeordneten Kompressionseinrichtungen, wobei dem Feedgas das Recyclegas über eine in die Feedgasleitung mündende Recyclegasteilstromleitung zuführbar ist. Unter einem Hochdruckreduktionsaggregat versteht man dabei ein Reduktionsaggregat, das für einen Betriebsdruck größer als 2 bar (200kPa), vorzugsweise größer als 3 bar (300kPa), noch bevorzugter größer als 4 bar (400kPa) ausgelegt ist. Der Betriebsdruck entspricht dem Druck des in das Reduktionsaggregat eingeleiteten Reduktionsgases.

Ein weiterer Gegenstand der vorliegenden Erfindung ist die Verwendung der Vorrichtung zur Durchführung des beschriebenen Verfahrens in einem Anlagenverbund mit einer Anlage zur Erzeugung von Roheisen und/oder Stahlvorprodukten, insbesondere einer FINEX^{®} - Anlage oder einer COREX^{®} - Anlage.

### Stand der Technik

Anmerkung: Bei allen Druckangaben im Text handelt es sich jeweils um den Druck über dem Atmosphärendruck.

Bei der Reduktion von eisenoxidhältigen Einsatzstoffen in einem Reduktionsaggregat wird ein Reduktionsgas sehr oft dadurch erzeugt, dass einem Feedgas, welches meist ein relativ geringes Reduktionspotential aufweist, vor Zuleitung in das Reduktionsaggregat, das in dem Feedgas enthaltene CO₂ zumindest zum Teil abgetrennt wird. Diese Abtrennung erfolgt mittels bekannten Einrichtungen zur Abtrennung von CO₂, wie beispielsweise PSA-Vorrichtungen (Druckwechsel-Adsorption). Eine PSA-Vorrichtung benötigt für eine effektive Arbeitsweise ein bestimmtes Mindestdruckniveau des in ihr zu behandelnden Feedgases. Um dies zu gewährleisten, wird das Feedgas vor Einleitung in die PSA-Vorrichtung, unter Einsatz großer Energiemengen, auf ein bestimmtes Mindestdruckniveau gebracht. Das durch die CO₂-Abtrennung gebildete Reduktionsgas weist sowohl ein relativ hohes Reduktionspotential als auch ein relativ hohes Druckniveau auf. Dabei ist das Druckniveau oftmals zu hoch, um es direkt einem Reduktionsaggregat zuzuführen, was meist in den strukturellen Eigenschaften des Reduktionsaggregates begründet ist. Deshalb wird die im Reduktionsgas in Form von Druckenergie enthaltene mechanische Energie vor der Zuführung in das Reduktionsaggregat, beispielsweise über Ventile, abgebaut. Das bei der Reduktion im Reduktionsaggregat verbrauchte Reduktionsgas wird aus diesem als Topgas abgezogen und weist im Vergleich zum zugeführten Reduktionsgas zwar ein geringeres, aber zumindest immer noch vorhandenes Reduktionspotential auf. Eine Teilmenge des abgezogenen Topgases wird als Recyclegas in das Feedgas zurückgeführt und mit diesem gemischt, bevor der dabei gebildeten Gasmischung das in ihr enthaltene CO₂, beispielsweise in einer PSA-Vorrichtung, wieder abgetrennt wird.

Mit Reduktionspotential wird dabei die Fähigkeit eines Gases bezeichnet, oxidhältige Stoffe zu reduzieren, während das Gas selbst dabei oxidiert wird. Die Teilmenge des abgezogenen Topgases wird deshalb als Recyclegas bezeichnet, da es dem Feedgas zugemischt wird und somit zumindest ein zweites Mal dem Reduktionsaggregat - nach Abtrennung von CO₂ - wieder zugeleitet wird.

Das Feedgas, welches als Grundlage für die Erzeugung des Reduktionsgases herangezogen wird, stammt oftmals aus einer Anlage zur Erzeugung von Roheisen, beispielsweise aus einem Hochofen oder einem Reduktionsschacht oder aus einer COREX^{®}-Anlage oder FINEX^{®}-Anlage. Das aus von solchen Anlagen abgezogene beziehungsweise aus diesen Anlagen exportierte Gas, wird als Exportgas bezeichnet. Wird dieses Exportgas in einer anderen Anlage, beilspielsweise in der erfindungsgemäßen Vorrichtung, als Grundlage für die Erzeugung des Reduktionsgases verwendet, so wird das Exportgas als Feedgas bezeichnet. Das bedeutet, dass sich bei Verwendung des Exportgases in einer anderen Anlage nur die Bezeichnung des Exportgases von Exportgas auf Feedgas ändert, jedoch die Eigenschaften des Exportgases unverändert bleiben.

Wenn ein solches Feedgas ein Exportgas aus einer oder mehreren Schmelzreduktionsanlagen oder Wirbelschichtreduktionsaggregaten, beispielsweise auf Basis von FINEX^{®} - oder COREX^{®} - Verfahren oder aus einem Hochofen ist, und in einer anderen Anlage, beispielsweise in der erfindungsgemäßen Vorrichtung, nach einer Aufbereitung zu Reduktionsgas wieder einem Reduktionsaggregat zugeführt wird, bezeichnet man ein all diese genannten Anlagen und Vorrichtungen umfassendes System als Verbundanlage.

Das Feedgas wird vor einer derartigen Aufbereitung gekühlt und/oder gereinigt, um die zur Aufbereitung zu Reduktionsgas benötigten Anlagen nicht zu schädigen beziehungsweise übermäßig zu belasten. Bei jedem Kühlvorgang beziehungsweise bei jedem Reinigungsvorgang wird dem Feedgas mechanische Energie in Form von Druckenergie entzogen, wodurch das Feedgas vor der Aufbereitung zu Reduktionsgas im Allgemeinen einen relativ geringen Druck, beispielweise einen Druck zwischen 0,5 bar bis 1,5 bar (50 kPa bis 150 kPa), aufweist.

Eine erste Möglichkeit der Aufbereitung des Feedgases zu Reduktionsgas besteht darin, dass dem Feedgas nach dessen Kompression komprimiertes Recyclegas zugemischt wird und die dabei erhaltene Gasmischung der CO₂-Abtrennung zugeführt wird.

Eine zweite Möglichkeit besteht darin, das Feedgas und das Recyclegas nach deren Zusammenführung gemeinsam zu komprimieren, bevor die dabei erhaltene Gasmischung der CO₂-Abtrennung zugeführt wird.

Das nach der CO₂-Abtrennung erhaltene Reduktionsgas weist aus den oben genannten Gründen oftmals einen zu hohen Druck auf und wird daher vor Einleitung in das Reduktionsaggregat auf einen für das Reduktionsaggregat passenden niedrigeren Druck gebracht. Da das vom Reduktionsaggregat abgezogene Topgas damit ebenfalls einen relativ niedrigen Druck aufweist - zumindest immer einen niedrigeren Druck als das in das Reduktionsaggregat eingeleitete Reduktionsgas, muss zumindest jene Teilmenge des Topgases, die als Recyclegas zurückgeführt und zu Reduktionsgas aufbereitet werden soll, immer wieder von einem sehr geringen Druckniveau auf ein zur Durchführung der CO₂ -Abtrennung notwendiges hohes Druckniveau gebracht werden.

Bei beiden Möglichkeiten wird zwischen der CO₂-Abtrennung und dem Reduktionsaggregat Druckenergie "vernichtet", die danach wieder zugeführt werden muss.

Diese beiden Möglichkeiten bieten außerdem jeweils nur eine Möglichkeit der Zumischung des Recyclegases zum Feedgas, wobei beide Möglichkeiten dadurch charakterisiert sind, dass dem Reduktionsgas vor der Zuleitung in das Reduktionsaggregat mechanische Energie in Form von Druckenergie entnommen und anschließend dem in die Vorrichtung zugeführten Feedgas, dem Recyclegas beziehungsweise der Gasmischung aus Feedgas und Recyclegas mechanische Energie in Form von Druckenergie zugeführt wird - mit einer insgesamt ungünstigen Energiebilanz.

Das zur Durchführung der CO₂-Abtrennung notwendige Druckniveau liegt typischerweise in einem Bereich zwischen 3 bar und 8 bar (300 kPa bis 800 kPa). Aus dem Stand der Technik sind VPSA-Vorrichtungen (Vakuum-Druckwechsel-Adsorption) zur Abtrennung von CO₂ aus einem Gas bekannt. Bei Verwendung solcher Vorrichtungen kann im Vergleich zu PSA-Vorrichtungen mit geringeren Druckniveaus gearbeitet werden, wodurch weniger Energie zur Kompression des Feedgases beziehungsweise des Recyclegases oder einer aus diesen Gasen gebildete Gasmischung aufzuwenden ist. Dieser Vorteil wird durch die Nachteile von VPSA-Vorrichtungen wieder mehr als aufgehoben, da VPSA-Vorrichtungen im Vergleich zu PSA-Vorrichtungen wesentlich teuerer in der Anschaffung und anfälliger für Betriebsstörungen sind. Die Verwendung von VPSA-Vorrichtungen ändert nichts an der jeweils nur einen Möglichkeit dem Feedgas das Recyclegas zuzumischen.

Die Reduktion von eisenoxidhältigen Einsatzstoffen wird oftmals unter einem geringen Druck - beispielsweise mit einem Druck des Reduktionsgases von 1,5 bar (150kPa) - durchgeführt. Auf Grund des geringen Druckes des Reduktionsgases ist auch die durch das Reduktionsaggregat strömende Reduktionsgasmasse pro Zeiteinheit, also die Reduktionsgasrate, gering. Je geringer die Reduktionsgasrate ist, desto geringer ist auch die Ausbringrate der im Reduktionsaggregat reduzierten Einsatzstoffe, also der Ausbringmenge der reduzierten Einsatzstoffe pro Zeiteinheit. Zur Erhöhung der Ausbringrate werden daher die Reduktionsaggregate hinsichtlich ihrer Fassungsvermögen an eisenoxidhältigen Einsatzstoffen vergrößert.

In der Anlage zur Erzeugung von Roheisen können Abweichungen vom normalen Betriebszustand auftreten, was eine Abweichung der Exportgasmenge beziehungsweise der Feedgasmenge zur Folge haben kann. Die Feedgasmenge kann beispielsweise um einen Mittelwert schwanken. Steigt die Feedgasmenge über ein bestimmtes Niveau, so kann es vorkommen, dass aus kapazitätsbeschränkenden Gründen ein Teil des Feedgases nicht mehr der Aufbereitung zu Reduktionsgas zugeführt werden kann und dieser Teil daher über eine eigene Bypassleitung am Reduktionsaggregat vorbeigeleitet werden muss.

### Zusammenfassung der Erfindung

### Technische Aufgabe

Der Erfindung liegt daher die Aufgabe zugrunde, ein Verfahren zur Reduktion von eisenoxidhältigen Einsatzstoffen mit verbesserter Energiebilanz zu finden, wobei gleichzeitig die Ausbringrate der reduzierten Einsatzstoffe erhöht, die Abmessungen der Anlagenteile reduziert und auf Schwankungen des Betriebszustandes des Verfahrens besser reagiert werden kann.

Eine weitere Aufgabe der Erfindung ist es, eine Vorrichtung zur Durchführung des Verfahrens zu finden.

### Technische Lösung

Die Aufgabe wird gelöst durch ein Verfahren zur Reduktion von eisenoxidhältigen Einsatzstoffen, bei dem ein Reduktionsgas in ein Hochdruckreduktionsaggregat eingeleitet wird, in dem Hochdruckreduktionsaggregat durch Reduktion von eisenoxidhältigen Einsatzstoffen verbrauchtes Reduktionsgas als Topgas aus dem Hochdruckreduktionsaggregat abgezogen wird, und zumindest eine Teilmenge des Topgases als Recyclegas einem Feedgas zugemischt wird, wobei das Reduktionsgas dadurch erzeugt wird, dass aus der durch das Zumischen des Recyclegases zu dem Feedgas erhaltenen Gasmischung nach einer oder mehreren Kompressionschritten CO₂ abgetrennt wird, wobei das Recyclegas dem Feedgas beziehungsweise der Gasmischung in zumindest zwei voneinander getrennten Recyclegasteilströmen mit unterschiedlichen Recyclegasteilstromdrücken in verschiedenen Abständen vom Hochdruckreduktionsaggregat zugemischt wird, und nach Zumischung jeweils eines Recyclegasteilstromes die dabei erhaltene Gasmischung komprimiert wird, bevor ein weiterer Recyclegasteilstrom zugemischt wird, und die Größen der zugemischten Recyclegasteilströme so geregelt werden, dass derjenige Recyclegasteilstrom, dessen Recyclegasteilstromdruck am höchsten ist, größer ist, als die jeweils anderen Recyclegasteilströme.

Das Hochdruckreduktionsaggregat kann beispielsweise als Reduktionsaggregat mit Wirbelschichtverfahren oder Festbettverfahren, als Hochofen oder als Reduktionsschacht ausgeführt sein, wobei der Arbeitsdruck des Hochdruckreduktionsaggregates dem Druck des Reduktionsgases entspricht und größer als 2 bar (200 kPa), vorzugsweise größer als 3 bar (300 kPa), noch bevorzugter größer als 4 bar (400 kPa), ist. Das Reduktionsgas hat ein hohes Reduktionspotential. Mit Reduktionspotential wird dabei die Fähigkeit eines Gases bezeichnet, oxidhältige Stoffe zu reduzieren, während das Gas dabei oxidiert wird. Das bedeutet in diesem Fall, dass es einen hohen Anteil an CO- und/oder H₂- Gas enthält. Das in das Hochdruckreduktionsaggregat eingeleitete Reduktionsgas kommt dabei mit dem in diesem befindlichen eisenoxidhältigen Einsatzstoffen, insbesondere Eisenerz, teilweise reduzierte eisenerzhältige Einsatzstoffe, direkt in Kontakt und wird dabei verbraucht. Das verbrauchte Reduktionsgas enthält einen geringeren Anteil an CO- und/oder H₂- Gas als das eingeleitete Reduktionsgas, insbesondere ist der Anteil an CO₂-Gas höher als beim eingeleiteten Reduktionsgas.

Die Recyclegasteilstromdrücke sind diejenigen Drücke der Recyclegasteilströme, bei denen die jeweiligen Recyclegasteilströme dem Feedgas beziehungsweise der Gasmischung aus Feedgas und Recyclegas zugemischt werden. Die jeweiligen Recyclegasteilströme werden dem Feedgas beziehungsweise der Gasmischung aus Feedgas und Recyclegas über Recyclegasteilstromleitungen zugemischt. Sind in den Recyclegasteilstromleitungen Einrichtungen zur Beeinflussung der Größe des jeweiligen Recyclegasteilstromes und/oder des Recyclegasteilstromdruckes vorhanden, so bezeichnen die jeweiligen Recyclegasteilstromdrücke den jeweiligen Recyclegasteilstromdruck, der sich nach dem Durchströmen der jeweiligen Einrichtung zur Beeinflussung der Größe des jeweiligen Recyclegasteilstromes und/oder des Recyclegasteilstromdruckes in der Recyclegasteilstromleitung einstellt.

Ein Recyclegasteilstrom kann dem Feedgas beziehungsweise der Gasmischung aus Feedgas und Recyclegas nur dann zugemischt werden, wenn der entsprechende Recyclegasteilstromdruck größer ist, als der Druck des Feedgases beziehungsweise der Gasmischung an der Stelle der jeweiligen Zumischung ist. Jede Stelle einer Zumischung entspricht einem anderen Abstand vom Hochdruckreduktionsaggregat. Die Recyclegasteilströme werden derart zugemischt, dass nach Zumischung eines ersten Recyclegasteilstromes zum Feedgas die dabei erhaltene Gasmischung komprimiert wird, bevor der Gasmischung ein zweiter Recyclegasteilstrom zugemischt wird. Der erste Recyclegasteilstrom wird dem Feedgas vor einem ersten Kompressionsschritt zugemischt. Die Größen des ersten und des zweiten Recyclegasteilstromes werden so geregelt, dass derjenige Recyclegasteilstrom, dessen Recyclegasteilstromdruck am höchsten ist, größer ist, als die jeweils anderen Recyclegasteilströme.

Die Regelung der Größen der Recyclegasteilströme erfolgt beispielsweise durch einfache Regelventile in den entsprechenden Recyclegasteilstromleitungen. Liegt der Druck des abgezogenen Topgases, beziehungsweise liegt der Druck des Recyclegases über dem Druck des Feedgases,so wird dem Feedgas der erste Recyclegasteilstrom zugemischt. Mittels des in der ersten Recyclegasteilstromleitung angebrachten Regelventils wird der erste Recyclegasteilstromdruck so weit reduziert, beispielsweise durch Expansion, dass der erste Recyclegasteilstromdruck nach dem Regelventil knapp - beispielsweise wenige Millibar, über dem Druck des Feedgases liegt, wodurch die Möglichkeit der Zumischung zum Feedgas besteht. Liegt der Druck des abgezogenen Topgases, beziehungsweise liegt der Druck des Recyclegases über dem Druck der nach Zumischung des ersten Recyclegasteilstromes zum Feedgas erhaltenen Gasmischung, so kann der Gasmischung auch der zweite Recyclegasteilstrom zugemischt werden. Dabei wird der zweite Recyclegasteilstromdruck, ebenfalls mittels des in der zweiten Recyclegasteilstromleitung angebrachten Regelventils so weit reduziert, dass der zweite Recyclegasteilstromdruck nach dem Regelventil knapp über dem Druck der Gasmischung liegt.

Daraus folgt, dass dem Feedgas, beziehungsweise der Gasmischung aus Feedgas und Recyclegas, sowohl der erste als auch der zweite Recyclegasteilstrom ohne vorherige Kompression zumischbar ist. Die vor der jeweiligen Zumischung der Recyclegasteilströme erforderliche Reduzierung der jeweiligen Recyclegasteilstromdrücke geht mit Energieverlust in Form von Druckenergieverlust einher. Dieser Energieverlust muss in weiterer Folge durch Einbringen von Kompressionsenergie in den jeweiligen Kompressionsschritten wieder ausgeglichen werden. Entsprechend der oben beschriebenen Art der Zumischung des ersten und/oder des zweiten Recycleggasteilstromes können den jeweils durch Zumischung erhaltenen Gasmischungen nach jedem Kompressionsschritt weitere Recyclegasteilströme zugemischt werden.

Erfindungsgemäß werden die Recyclegasteilströme derart zugemischt, dass derjenige Recyclegasteilstrom, dessen Recyclegasteilstromdruck am höchsten ist, größer ist, als die jeweils anderen Recyclegasteilströme. Auf diese Art werden die Energieverluste, die durch die Expansion der jeweiligen Recyclegasteilströme hervorgerufen werden, minimiert. Zusätzlich werden die Kompressionsschritte, und damit die einzubringende Kompressionsenergie, für den jeweils größten Recyclegasteilstrom minimiert, da dieser schon mit dem höchstmöglichen Recyclegasteilstromdruck zugemischt wird.

Insgesamt wird dadurch die in den jeweiligen Recyclegasteilströmen vorhandene mechanische Energie in Form von Druckenergie bestmöglich genutzt, was eine Optimierung der Energiebilanz des Gesamtsystems zur Folge hat.

Der erste Recyclegasteilstrom, also diejenige Teilmenge des Recyclegases, welche dem Feedgas über den ersten Recyclegasteilstrom zugemischt wird, wird gleichzeitig dazu verwendet, Mengenschwankungen, Druckschwankungen und/oder Volumsschwankungen des Feedgases auszugleichen um nachgeschaltete Aggregate, insbesondere die Kompressoren, mit konstantem Volumenstrom zu versorgen. Dadurch werden die empfindlichen Kompressoren geschont und die Ausfallsicherheit beziehungsweise die Lebensdauer der Kompressoren wird erhöht. Gleichzeitig kann damit eine Erhöhung des Gesamtwirkungsgrades der Kompressoren erreicht werden.

Ein weiterer Vorteil der Erfindung besteht darin, dass auf Schwankungen des Betriebszustandes, insbesondere des Betriebszustandes bei der Reduktion der eisenoxidhältigen Einsatzstoffe im Hochdruckreduktionsaggregat oder beim Anfahren und Abstellen des Hochdruckreduktionsaggregates, reagiert werden kann, unter gleichzeitiger Beibehaltung einer günstigen Energiebilanz. Ist beispielsweise eine Erhöhung der Ausbringrate der im Hochdruckreduktionsaggregat reduzierten Einsatzstoffe, also der Ausbringmenge der reduzierten Einsatzstoffe pro Zeiteinheit erwünscht, so wird der Druck des Reduktionsgases stufenweise angehoben. Das hat eine Anhebung des Druckes des abgezogenen Topgases und eine Anhebung des Druckes des Recyclegases zur Folge, wobei gleichzeitig die Größen der jeweiligen Recyclegasteilströme so nachgeregelt werden, dass wiederum eine optimale Energiebilanz erzielt wird.

Es besteht die Möglichkeit, der nach dem zuletzt durchgeführten Kompressionsschritt vorliegenden Gasmischung einen komprimierten Recyclegasteilstrom zuzumischen. In diesem Fall wird der Druck des komprimierten Recyclegasteilstromes so weit erhöht, beispielsweise mittels eines Kompressors, dass dieser nach der Kompression knapp über dem Druck der Gasmischung nach dem zuletzt durchgeführten Kompressionsschritt ist. Die Zumischung des größten Recyclegasteilstromes über den komprimierten Recylclegasteilstrom erfolgt nur dann, wenn dies insgesamt zu einer Optimierung der Energiebilanz führt. Das heißt, wenn bei Zumischung des gesamten Recyclegases über die unkomprimierten Recyclegasteilströme die Summe aus Energieverluste durch Expansion und Energieaufwände durch Kompression höher wäre, als der Energieaufwand durch Kompression des nach dem letzten Kompressionsschritt zugeführten Recyclegasteilstromes. Die Zumischung des größten Recyclegasteilstromes erfolgt insbesondere dann über den komprimierten Recyclegasteilstrom, wenn der Druck des abgezogenen Topgases beziehungsweise der Druck des Recyclegases kleiner ist, als der Druck des Feedgases, beispielsweise wenn das Hochdruckreduktionsaggregat nach einem Stillstand wieder hochgefahren wird.

Eine weitere bevorzugte Ausführungsform ergibt sich dadurch, dass der Druck des Reduktionsgases und/oder der Druck des abgezogenen Topgases mittels einer in einer DR-Exportgasleitung angeordneten Einrichtung zur Druckregelung eingestellt wird.

Mittels der DR-Exportgasleitung (Direct Reduction-Exportgasleitung) wird jene Menge an abgezogenem Topgas als DR-Exportgas (Direct Reduction-Exportgas) abgeführt, die dem Feedgas beziehungsweise der/den Gasmischung(en) aus Feedgas und Recyclegas nicht wieder zugemischt wird. Soll der Druck des DR-Exportgases - und somit auch der Druck des abgezogenen Topgases angepasst werden, so wird gleichzeitig der zwischen den Kompressionsschritten vorhandene Druck der Gasmischung aus Feedgas und Recyclegas verstellt. Dadurch kann der Druck des abgezogenen Topgases in weiten Bereichen angepasst werden, ohne dass mechanische Energie, beispielsweise Expansionsenergie, in Form von Druckenergie verloren geht. Eine Anpassung des Druckes des DR-Exportgases kann beispielsweise dann notwendig sein, wenn ein bestimmtes Druckniveau für die Nutzung des DR-Exportgases in nachgeordneten Anlagen notwendig ist.

Eine bevorzugte Ausführungsform der Erfindung besteht darin, dass das Recyclegas dem Feedgas beziehungsweise der Gasmischung in drei voneinander getrennten Recyclegasteilströmen zugemischt wird.

Werden drei Recyclegasteilströme zum Feedgas oder der Gasmischung aus Feedgas und Recyclegas zugemischt, ist das Verhältnis aus Anlagenaufwand und Flexibilität des Verfahrens hinsichtlich Optimierung der Energiebilanz ausgewogen.

Nach einer weiteren Ausführungsform wird das aus dem Reduktionsaggregat abgezogene Topgas gereinigt und/oder einem Wärmetausch unterzogen.

Dadurch werden nachfolgende Anlagenteile, insbesondere Druckregelventile und/oder Kompressoren, von einer zu hohen Staubbelastung an in den Recyclegasteilströmen vorhandenen Feststoffteilchen verschont. Zusätzlich kann die fühlbare Wärme des abgezogenen Topgases genutzt werden, was zu einer weiteren Verbesserung der Energiebilanz beiträgt.

Eine weitere vorteilhafte Ausgestaltung des Verfahrens ergibt sich dann, wenn das Feedgas Exportgas aus einer Anlage zur Roheisenerzeugung, insbesondere Hochofengas, Tiegelgas, Synthesegas aus einem Kohlevergaser, Kohlegas, Koksofengas, Topgas aus einem Hochofen oder einem Reduktionsschacht oder Offgas aus einem Wirbelschichtreduktionsaggregat umfasst.

Damit können Gase, die im Normalfall einer Verbrennung zugeführt werden - gegebenenfalls nach einer Aufbereitung - zur Reduktion von eisenoxidhältigen Einsatzstoffen herangezogen werden.

Nach einer weiteren Ausführungsform beträgt der Druck des abgezogenen Topgases und damit auch der Druck des Recyclegases beziehungsweise die Recyclegasteilstromdrücke zwischen 1 bar (100 kPa) und 20 bar (2 MPa), vorzugsweise zwischen 2 bar (200 kPa) und 10 bar (1 MPa), noch bevorzugter zwischen 3 bar (300 kPa) und 7 bar (700 kPa).

Dadurch kann eine sehr hohe Ausbringrate der im Hochdruckreduktionsaggregat reduzierten Einsatzstoffe, also der Ausbringmenge der reduzierten Einsatzstoffe pro Zeiteinheit unter gleichzeitiger Minimierung der Anlagendimensionen wie beispielsweise die Rohrleitungsdurchmesser oder das Hochdruckreduktionsaggregat erzielt werden.

Ein weiterer Gegenstand der Erfindung ist eine Vorrichtung zur Durchführung des Verfahrens umfassend ein Hochdruckreduktionsaggregat mit einer Reduktionsgasleitung zur Zufuhr von Reduktionsgas in das Hochdruckreduktionsaggregat und mit einer Topgasleitung zum Abziehen von Topgas aus dem Hochdruckreduktionsaggregat, eine Feedgasleitung mit darin angeordneten Kompressionseinrichtungen zur Zufuhr von Feedgas beziehungsweise zur Zufuhr einer Gasmischung aus Feedgas und Recyclegas, welche in eine Einrichtung zur Abtrennung von CO₂ mündet, und zumindest zwei in unterschiedliche Längsabschnitte der Feedgasleitung mündende Recyclegasteilstromleitungen zur Zufuhr des abgezogenen Topgases in die Feedgasleitung vorhanden sind, wobei eine erste Recyclegasteilstromleitung vor einer ersten Kompressionseinrichtung in die Feedgasleitung mündet und eine zweite Recyclegasteilstromleitung nach der ersten Kompressionseinrichtung in die Feedgasleitung mündet und in den Recyclegasteilstromleitungen angeordnete Einrichtungen zur Beeinflussung der Größe des jeweiligen Recyclegasteilstromes und/oder des Recyclegasteilstromdruckes vorhanden sind und die Längsabschnitte durch die in der Feedgasleitung angeordneten Kompressionseinrichtungen voneinander getrennt sind.

Die Einrichtungen zur Beeinflussung der Größe des jeweiligen Recyclegasteilstromes und/oder des Recyclegasteilstromdruckes können insbesondere Regelventile sein. Es ist auch möglich, dass eine oder mehrere Einrichtungen zur Beeinflussung der Größe des jeweiligen Recyclegasteilstromes und/oder des Recyclegasteilstromdruckes Einrichtungen zur Komprimierung des jeweiligen Recyclegasteilstromes, insbesondere Kompressoren, sind.

Wird das Hochdruckreduktionsaggregat abgestellt, beispielsweise wegen Reparaturarbeiten oder Wartungsarbeiten, oder fallen Teile der Gesamtanlage wie die in der Feedgasleitung angeordneten Kompressionseinrichtungen ganz oder teilweise aus, so besteht die Möglichkeit, das zugeführte Feedgas ohne großen Aufwand direkt über die erste Recyclegasteilstromleitung am Hochdruckreduktionsaggregat vorbeizuleiten. Dies ist deshalb ohne großen Aufwand möglich, weil das Feedgas bei dieser Art der Vorbeileitung am Hochdruckreduktionsaggregat keine Kompressionseinrichtungen, insbesondere in einer dem gewöhnlichen Betriebszustand von Kompressionseinrichtungen entgegengesetzten Richtung, durchströmen muss. Das Vorbeigeleitete Feedgas muss gegebenenfalls nur die Einrichtung zur Beeinflussung der Größe des ersten Recyclegasteilstromes und/oder des ersten Recyclegasteilstromdruckes durchströmen. Da es sich bei dieser Einrichtung im Regelfall um einfache Druckregelventile handelt, ist dies ohne großen Aufwand zu realisieren. Eine eigene Bypassleitung zur Vorbeileitung des Feedgases am Hochdruckreduktionsaggregat ist deshalb überflüssig.

Eine weitere Ausführungsform der Vorrichtung ist dadurch gekennzeichnet, dass eine DR-Exportgasleitung zur Abfuhr von DR-Exportgas aus der Vorrichtung mit einer darin angeordneten Einrichtung zur Druckregelung des Reduktionsgases und/oder des abgezogenen Topgases vorhanden ist.

Eine bevorzugte Ausführungsform ist dadurch gekennzeichnet, dass in zumindest einer der Recyclegasteilstromleitungen der Einrichtung zur Beeinflussung der Größe des jeweiligen Recyclegasteilstromes und/oder des Recyclegasteilstromdruckes eine Einrichtung zur Komprimierung des jeweiligen Recyclegasteilstromes strömungstechnisch parallel geschaltet ist.

Diese Anlagenkonfiguration ermöglicht ein höchstmögliches Maß an Flexibilität der Regelung der jeweiligen Recyclegasteilströme in Abhängigkeit vom jeweiligen Recyclegasteilstromdruck. Insbesondere kann dadurch gewährleistet werden, dass alle vorhandenen Einrichtungen zur Kompression konstante Druckverhältnisse und konstante Volumenstromverhältnisse vorfinden.

Eine weitere bevorzugte Ausführungsform ist dadurch gegeben, dass drei in unterschiedliche Längsabschnitte der Feedgasleitung mündende Recyclegasteilstromleitungen zur Zufuhr des abgezogenen Topgases in die Feedgasleitung vorhanden sind.

Damit wird bei anlagentechnisch vertretbarem Aufwand ein hohes Maß an Flexibilität der Regelung der jeweiligen Recyclegasteilströme in Abhängigkeit vom jeweiligen Recyclegasteilstromdruck gewährleistet.

Eine weitere Ausführungsform besteht darin, dass in der Topgasleitung eine Einrichtung zur Reinigung des Topgases und/oder eine Einrichtung zum Wärmetausch angeordnet ist.

Die Einrichtung zur Reinigung des Topgases kann als Entstaubungseinrichtung, insbesondere als Trockenentstaubungseinrichtung oder als Nassentstaubungseinrichtung ausgeführt sein. Dadurch wird verhindert, dass sowohl bewegliche Anlagenteile, wie beispielsweise rotierende Teile von Kompressoren, als auch unbewegliche Teile, wie beispielsweise die Innenwände der Recyclegasteilstromleitungen oder die Innenwände der Reduktionsgasleitungen einen Schaden durch die in den jeweiligen Gasströmen vorhandenen Feststoffteilchen nehmen. Durch die Einrichtungen zum Wärmetausch in der Topgasleitung kann die fühlbare Wärme des Topgases beispielsweise in anderen Prozessen nutzbar gemacht werden.

Eine andere bevorzugte Ausführungsform der Vorrichtung ist dadurch gekennzeichnet, dass die Einrichtung zur Abtrennung von CO₂ eine PSA-Vorrichtung oder eine VPSA-Vorrichtung oder eine Einrichtung zur Trennung von Gasmischungen mittels Membrantechnik und/oder chemischer Reaktion ist.

Dabei hat die Ausführung der Einrichtung zur Abtrennung von CO₂ als PSA-Vorrichtung gegenüber der Ausführung als VPSA-Vorrichtung den Vorteil, dass eine PSA-Vorrichtung kostengünstiger ist und auch bei höheren Drücken effektiv arbeitet.

Einen weiteren Gegenstand der Erfindung betrifft die Verwendung der Vorrichtung in einem Anlagenverbund mit einer Anlage zur Erzeugung von Roheisen und/oder Stahlvorprodukten, insbesondere einer FINEX^{®} - Anlage oder einer COREX^{®} - Anlage.

Prozessgase aus solchen Anlagen werden oftmals einer Verbrennung zugeführt und dadurch dem ursprünglichen Stoffkreislauf entzogen. Werden die Prozessgase, gegebenenfalls nach einer Aufbereitung, aus solchen Anlagen als Feedgas der Vorrichtung zur Reduktion von eisenoxidhältigen Einsatzstoffen zugeführt, so kann beispielsweise das in diesen Prozessgasen noch immer vorhandene Reduktionspotential einer optimalen Nutzung unterzogen werden.

### Kurze Beschreibung der Zeichnungen

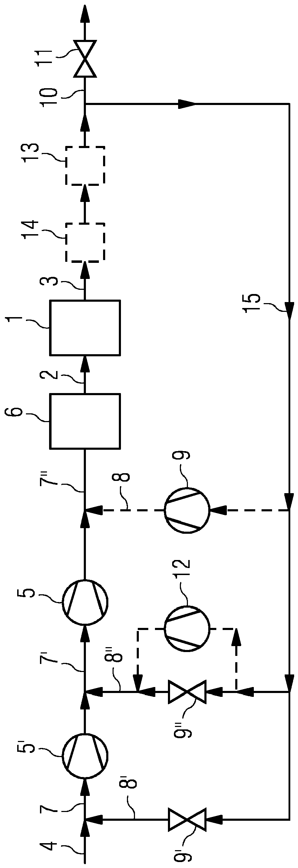

Die Erfindung wird nachfolgend in beispielhafter Weise anhand der beigefügten Figur erläutert. Die Figur zeigt beispielhaft und schematisch das erfindungsgemäße Verfahren und den Aufbau der erfindungsgemäßen Vorrichtung zur Reduktion von eisenoxidhältigen Einsatzstoffen.

### Beschreibung der Ausführungsform

In der Figur ist beispielhaft und schematisch ein Verfahren und eine Vorrichtung zur Reduktion von eisenoxidhältigen Einsatzstoffen skizziert, welche das erfindungsgemäße Verfahren und die erfindungsgemäße Vorrichtung umfasst.

Die in der Figur eingezeichneten Pfeile kennzeichnen die jeweiligen tatsächlichen und/oder möglichen Strömungsrichtungen der in der erfindungsgemäßen Vorrichtung vorkommenden Gasströme in einem gewöhnlichen Betriebszustand der Vorrichtung beziehungsweise des Verfahrens.

Beim erfindungsgemäßen Verfahren wird ein Reduktionsgas dadurch erzeugt, dass einem Feedgas welches der Vorrichtung über eine Feedgasleitung (4) zugeführt wird, ein erster Recyclegasteilstrom über eine erste Recylegasteilstromleitung (8') in einem Längsabschnitt (7) der Feedgasleitung (4) zugeführt wird. Die dabei erhaltene Gasmischung aus Feedgas und erstem Recyclegasteilstrom wird in einer ersten Kompressionseinrichtung (5') komprimiert bevor der Gasmischung über eine zweite Recyclegasteilstromleitung (8") ein zweiter Recyclegasteilstrom in einem Längsabschnitt (7') der Feedgasleitung (4) zugemischt wird. Nach Zumischung des zweiten Recyclegasteilstromes wird die Gasmischung aus Feedgas, erstem Recyclegasteilstrom und zweitem Recyclegasteilstrom in einer Kompressionseinrichtung (5) komprimiert, bevor der dadurch erhaltenen Gasmischung gegebenenfalls ein komprimierter Recyclegasteilstrom über die Recyclegasteilstromleitung (8) in einem Längsabschnitt (7") der Feedgasleitung (4) zugemischt wird. Nach Zumischung des komprimierten Recyclegasteilstromes zur Gasmischung wird die Gasmischung, welche einen zur Reduktion von eisenoxidhältigen Einsatzstoffen zu geringen Anteil an reduktionsfähigem Gas wie CO und/oder H₂ enthält, einer Einrichtung (6) zur Abtrennung von CO₂ zugeführt. Die Einrichtung (6) zur Abtrennung von CO₂ kann beispielsweise eine PSA-Vorrichtung oder eine VPSA-Vorrichtung oder eine Einrichtung zur Trennung von Gasmischungen mittels Membrantechnik und/oder chemischer Reaktion sein. Das aus der Einrichtung (6) zur Abtrennung von CO₂ abgezogene Gas wird einem Hochdruckreduktionsaggregat (1) über eine Reduktionsgasleitung (2) zugeführt. Das dem Hochdruckreduktionsaggregat (1) zugeführte Reduktionsgas reduziert die sich im Hochdruckreduktionsaggregat (1) befindlichen eisenoxidhältigen Einsatzstoffe und wird dabei verbraucht. Das verbrauchte Reduktionsgas wird als Topgas aus dem Hochdruckreduktionsaggregat (1) über die Topgasleitung (3) abgezogen. Gegebenenfalls wird das abgezogene Topgas einer Einrichtung (14) zum Wärmetausch und/oder einer Einrichtung (13) zur Reinigung des Togases zugeführt. Eine Teilmenge des Topgases wird als Recyclegas (15) über die erste Recyclegasteilstomleitung (8'), die zweite Recyclegasteilstromleitung (8") und gegebenenfalls über die Recyclegasteilstromleitung (8) in die Feedgasleitung (4) eingebracht. Der nicht als Recyclegas (15) zurückgeführte Anteil des abgezogenen Topgases wird über eine DR-Exportgasleitung (10) aus der Vorrichtung abgezogen. Eine in der DR-Exportgasleitung (10) angeordnete Einrichtung (11) zur Druckregelung des Reduktionsgases und/oder des abgezogenen Topgases ermöglicht eine gezielte Einstellung des Druckes des abgezogenen Topgases und/oder des Reduktionsgases. Mittels einer in der ersten Recyclegasteilstromleitung (8') angeordneten Einrichtung (9) zur Beeinflussung der Größe des ersten Recyclegasteilstromes und/oder des ersten Recyclegasteilstromdruckes, insbesondere ein Regelventil, wird die Größe des in die Feedgasleitung (4) eingebrachten ersten Recyclegasteilstromes geregelt. Die Größe des zweiten Recyclegasteilstromes und/oder des zweiten Recyclegasteilstromdruckes wird über die in der zweiten Recyclegasteilstromleitung (8") angeordnete Einrichtung (9") zur Beeinflussung der Größe des zweiten Recyclegasteilstromes und/oder des zweiten Recyclegasteilstromdruckes eingestellt beziehungsweise geregelt.

Ein typischer Betriebszustand des Verfahrens zeichnet sich dadurch aus, dass der Druck des abgezogenen Topgases beziehungsweise des Recyclegases (15), welcher gleichzeitig den Recyclegasteilstromdrücken vor dem Durchströmen der Einrichtungen (9,9',9") zur Beeinflussung der Größe des jeweiligen Recyclegasteilstromes und/oder des Recyclegasteilstromdruckes entspricht, 3,3 bar (330 kPa), der Druck des Feedgases im Längsabschnitt (7) der Feedgasleitung 1,5 bar (150 kPa), der Druck der Gasmischung aus Feedgas und erstem Recyclegasteilstrom nach dem ersten Kompressionsschritt im Längsabschnitt (7') der Feedgasleitung (4) 3 bar (300 kPa) und der Druck der Gasmischung aus Feedgas, erstem und zweiten Recyclegasteilstrom nach dem zweiten Kompressionsschritt im Längsabschnitt (7") der Feedgasleitung (4) 10 bar (1 MPa) beträgt.

Beispielsweise beträgt bei einer Gesamtmenge des Recyclegases (15) von 220.000 Normkubikmeter pro Stunde die Größe des ersten Recyclegasteilstromes in der ersten Recyclegasteilstromleitung (8') 0 bis 20.000 Normkubikmeter pro Stunde und die Größe des zweiten Recyclegasteilstromes in der zweiten Recyclegasteilstromleitung (8") 200.000 bis 220.000 Normkubikmeter pro Stunde. Der Druck des Recyclegases (15) liegt in diesem Fall 0,3 bar (30 kPa) über dem Druck der Gasmischung im Abschnitt (7') der Feedgasleitung (4) und ist deshalb ausreichend hoch, um das Recyclegas (15) ohne vorherige Kompression über die zweite Recyclegasteilstromleitung (8") in den Längsabschnitt (7') der Feedgasleitung (4) einzubringen. Der in den Längsabschnitt (7) eingebrachte erste Recyclegasteilstrom dient in erster Linie dazu, Volumsschwankungen und/oder Druckschwankungen des Feedgases auszugleichen. Dieser Zustand ist energetisch günstiger, als den größeren Anteil des Recyclegases (15) über den ersten Recyclegasteilstrom in das Feedgas einzubringen und anschließend die dabei erhaltene Gasmischung in der ersten Kompressionseinrichtung (5') zu komprimieren. Dies zeigt eine einfache Aufstellung einer Energiebilanz:

Vor Zuführung der Gasmischung in die Einrichtung zur Abtrennung von CO₂ wird der Druck der Gasmischung beispielsweise auf 10 bar (1 MPa) angehoben. Bei Anwendung des erfindungsgemäßen Verfahrens wird die Hauptmenge des Recyclegases (15) über den zweiten Recyclegasteilstrom in die Feedgasleitung (4) eingebracht. Dazu wird der zweite Recyclegasteilstromdruck mittels der Einrichtung (9") zur Beeinflussung der Größe des zweiten Recyclegasteilstromes und/oder des Recyclegasteilstromdruckes von 3,3 bar (330 kPa) auf 3 bar (300 kPa), beziehungsweise auf knapp über 3 bar (300 kPa), reduziert, das entspricht dem Druck, beziehungsweise liegt knapp über dem Druck der Gasmischung im Längsabschnitt (7') der Feedgasleitung (4). Dabei werden 0,3 bar (30 kPa), beispielsweise durch Expansion des zweiten Recyclegasteilstromes in der Einrichtung (9") zur Beeinflussung der Größe des zweiten Recyclegasteilstromes und/oder des Recyclegasteilstromdruckes, an Druckenergie "vernichtet". Mit Druckenergie wird die Energie pro Volumseinheit an Gas bezeichnet. Der Gasmischung im Längsabschnitt (7') der Feedgasleitung (4) wird anschließend in der Kompressionseinrichtung (5) Druckenergie im Ausmaß von 7 bar (700 kPa) zugeführt. Die Summe aus "vernichteter" Druckenergie und zugeführter Druckenergie beträgt 7,3 bar (730 kPa). Würde die Hauptmenge des Recyclegases (15) ausschließlich über den ersten Recyclegasteilstrom in die Feedgasleitung (4) eingebracht werden, so müsste man in der Einrichtung (9') zur Beeinflussung der Größe des ersten Recyclegasteilstromes und/oder des Recyclegasteilstromdruckes 1,8 bar (180 kPa) an Druckenergie "vernichten" und der Gasmischung anschließend in der ersten Kompressionseinrichtung (5') Druckenergie im Ausmaß von 1,5 bar (150 kPa) und in der Kompressionseinrichtung (5) Druckenergie im Ausmaß von 7 bar (700 kPa) zuführen. Die Summe aus "vernichteter" Druckenergie und zugeführter Druckenergie würde 10,3 bar (1,03 MPa) betragen, was wesentlich höher ist als beim erfindungsgemäßen Verfahren.

Gegebenenfalls wird zusätzlich ein komprimierter Recyclegasteilstrom über die Recyclegasteilstromleitung (8) in einen Längsabschnitt (7") der Feedgasleitung (4) eingebracht. Damit ist es möglich, dass das Recylcegas beispielsweise auch dann in die Feedgasleitung (4) eingebracht werden kann, wenn der Druck des abgezogenen Topgases beziehungsweise des Recyclegases kleiner ist, als der Druck des Feedgases. Insbesondere tritt dieser Betriebszustand beim Anfahren nach einem Anlagenstillstand des Hochdruckreduktionsaggregates (1) auf.

Optional ist der Einrichtung (9") zur Beeinflussung der Größe des zweiten Recyclegasteilstromes eine Einrichtung (12) zur Verdichtung des Recyclegasteilstromes strömungstechnisch parallel geschaltet.

Das Feedgas, welches der Vorrichtung über die Feedgasleitung (4) zugeführt wird, kann Exportgas aus einer Anlage zur Roheisenerzeugung, insbesondere Hochofengas, Tiegelgas, Synthesegas aus einem Kohlevergaser, Kohlegas, Koksofengas, Topgas aus einem Hochofen oder einem Reduktionsschacht oder Offgas aus einem Wirbelschichtreduktionsaggregat umfassen. Bevorzugt umfasst das Feedgas Exportgas aus einer FINEX^{®} - Anlage oder einer COREX^{®} - Anlage.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Liste der Bezugszeichen

- 1: Hochdruckreduktionsaggregat
- 2: Reduktionsgasleitung
- 3: Topgasleitung
- 4: Feedgasleitung
- 5: Kompressionseinrichtung
- 5': erste Kompressionseinrichtung
- 6: Einrichtung zur Abtrennung von CO₂
- 7,7',7": Längsabschnitte der Feedgasleitung
- 8: Recyclegasteilstromleitung
- 8': erste Recyclegasteilstromleitung
- 8": zweite Recyclegasteilstromleitung
- 9, 9', 9": Einrichtungen zur Beeinflussung der Größe des jeweiligen Recyclegasteilstromes und/oder des Recyclegasteilstromdruckes
- 10: DR-Exportgasleitung
- 11: Einrichtung zur Druckregelung des Reduktions gases und/oder des abgezogenen Topgases
- 12: Einrichtung zur Verdichtung des Recyclegasteilstromes
- 13: Einrichtung zur Reinigung des Topgases
- 14: Einrichtung zum Wärmetausch
- 15: Recyclegas

## Patentansprüche

1. Verfahren zur Reduktion von eisenoxidhältigen Einsatzstoffen, bei dem ein Reduktionsgas in ein Hochdruckreduktionsaggregat eingeleitet wird, in dem Hochdruckreduktionsaggregat durch Reduktion von eisenoxidhältigen Einsatzstoffen verbrauchtes Reduktionsgas als Topgas aus dem Hochdruckreduktionsaggregat abgezogen wird, und zumindest eine Teilmenge des Topgases als Recyclegas einem Feedgas zugemischt wird, wobei das Reduktionsgas dadurch erzeugt wird, dass aus der durch das Zumischen des Recyclegases zu dem Feedgas erhaltenen Gasmischung nach einer oder mehreren Kompressionschritten CO₂ abgetrennt wird, **dadurch gekennzeichnet dass** das Recyclegas dem Feedgas beziehungsweise der Gasmischung in zumindest zwei voneinander getrennten Recyclegasteilströmen mit unterschiedlichen Recyclegasteilstromdrücken in verschiedenen Abständen vom Hochdruckreduktionsaggregat zugemischt wird, und dass nach Zumischung jeweils eines Recyclegasteilstromes die dabei erhaltene Gasmischung komprimiert wird, bevor ein weiterer Recyclegasteilstrom zugemischt wird, und dass die Größen der zugemischten Recyclegasteilströme so geregelt werden, dass derjenige Recyclegasteilstrom, dessen Recyclegasteilstromdruck am höchsten ist, größer ist, als die jeweils anderen Recyclegasteilströme.

2. Verfahren nach Anspruch 1, **dadurch gekennzeichnet, dass** der Druck des Reduktionsgases und/oder der Druck des abgezogenen Topgases über eine in einer DR-Exportgasleitung angeordneten Einrichtung zur Druckregelung eingestellt wird.

3. Verfahren nach einem der Ansprüche 1 oder 2, **dadurch gekennzeichnet, dass** das Recyclegas dem Feedgas beziehungsweise der Gasmischung in drei voneinander getrennten Recyclegasteilströmen zugemischt wird.

4. Verfahren nach einem der vorhergehenden Ansprüche, **dadurch gekennzeichnet, dass** das aus dem Reduktionsaggregat abgezogene Topgas gereinigt und/oder einem Wärmetausch unterzogen wird.

5. Verfahren nach einem der vorhergehenden Ansprüche, **dadurch gekennzeichnet, dass** das Feedgas Exportgas aus einer Anlage zur Roheisenerzeugung, insbesondere Hochofengas, Tiegelgas, Synthesegas aus einem Kohlevergaser, Kohlegas, Koksofengas, Topgas aus einem Hochofen oder einem Reduktionsschacht oder Offgas aus einem Wirbelschichtreduktionsaggregat umfasst.

6. Verfahren nach einem der vorhergehenden Ansprüche, **dadurch gekennzeichnet, dass** der Druck des abgezogenen Topgases zwischen 1 bar (100 kPa) und 20 bar (2 MPa), vorzugsweise zwischen 2 bar (200 kPa) und 10 bar (1 MPa), noch bevorzugter zwischen 3 bar (300 kPa) und 7 bar (700 kPa) beträgt.

7. Vorrichtung zur Durchführung des Verfahrens nach einem der Ansprüche 1 bis 6, umfassend ein Hochdruckreduktionsaggregat (1) mit einer Reduktionsgasleitung (2) zur Zufuhr von Reduktionsgas in das Hochdruckreduktionsaggregat (1) und mit einer Topgasleitung (3) zum Abziehen von Topgas aus dem Hochdruckreduktionsaggregat (1), eine Feedgasleitung (4) mit darin angeordneten Kompressionseinrichtungen (5,5') zur Zufuhr von Feedgas beziehungsweise zur Zufuhr einer Gasmischung aus Feedgas und Recyclegas, welche in eine Einrichtung (6) zur Abtrennung von CO₂ mündet, **dadurch gekennzeichnet, dass** zumindest zwei in unterschiedliche Längsabschnitte (7,7',7") der Feedgasleitung (4) mündende Recyclegasteilstromleitungen (8,8',8") zur Zufuhr des abgezogenen Topgases in die Feedgasleitung (4) vorhanden sind, wobei eine erste Recyclegasteilstromleitung (8') vor einer ersten Kompressionseinrichtung (5') in die Feedgasleitung (4) mündet und eine zweite Recyclegasteilstromleitung (8") nach der ersten Kompressionseinrichtung (5') in die Feedgasleitung (4) mündet und in den Recyclegasteilstromleitungen (8,8',8") angeordnete Einrichtungen (9,9',9") zur Beeinflussung der Größe des jeweiligen Recyclegasteilstromes und/oder des Recyclegasteilstromdruckes vorhanden sind und die Längsabschnitte (7,7',7") durch die in der Feedgasleitung (4) angeordneten Kompressionseinrichtungen (5,5') voneinander getrennt sind.

8. Vorrichtung nach Anspruch 7, **dadurch gekennzeichnet, dass** eine DR-Exportgasleitung (10) zur Abfuhr von DR-Exportgas aus der Vorrichtung mit einer darin angeordneten Einrichtung (11) zur Druckregelung des Reduktionsgases und/oder des abgezogenen Topgases vorhanden ist.

9. Vorrichtung nach einem der Ansprüche 7 oder 8, **dadurch gekennzeichnet, dass** in zumindest einer der Recyclegasteilstromleitungen (8,8',8") der Einrichtung (9,9',9") zur Beeinflussung der Größe des jeweiligen Recyclegasteilstromes und/oder des Recyclegasteilstromdruckes eine Einrichtung (12) zur Verdichtung des Recyclegasteilstromes strömungstechnisch parallel geschaltet ist.

10. Vorrichtung nach einem der Ansprüche 7 bis 9, **dadurch gekennzeichnet, dass** drei in unterschiedliche Längsabschnitte der Feedgasleitung mündende Recyclegasteilstromleitungen zur Zufuhr des abgezogenen Topgases in die Feedgasleitung vorhanden sind.

11. Vorrichtung nach einem der Ansprüche 7 bis 10, **dadurch gekennzeichnet, dass** in der Topgasleitung (3) eine Einrichtung (13) zur Reinigung des Topgases und/oder eine Einrichtung (14) zum Wärmetausch angeordnet ist.

12. Vorrichtung nach einem der Ansprüche 7 bis 11, **dadurch gekennzeichnet, dass** die Einrichtung (6) zur Abtrennung von CO₂ eine PSA-Vorrichtung oder eine VPSA-Vorrichtung oder eine Einrichtung zur Trennung von Gasmischungen mittels Membrantechnik und/oder chemischer Reaktion ist.

13. Verwendung der Vorrichtung nach einem der Ansprüche 7 bis 12 in einem Anlagenverbund mit einer Anlage zur Erzeugung von Roheisen und/oder Stahlvorprodukten, insbesondere einer FINEX^{®} - Anlage oder einer COREX^{®} - Anlage.
